# EUROPÄISCHE PATENTSCHRIFT

(11) **EP 1 538 337 B1**
(45) Veröffentlichungstag und Bekanntmachung des Hinweises auf die Patenterteilung: **05.03.2014**
(21) Anmeldenummer: 03027648.9
(22) Anmeldetag: 02.12.2003
(51) Int. Cl.: F04B 49/24, H02H 7/085

(54) **Anordnung zum Überlastschutz und Verfahren zur Reduktion des Stromverbrauchs bei Netzspannungsschwankungen**
Overload protective arrangement and method for reducing power consumption upon voltage fluctuations
Montage de protection contre les surcharges et procédé visant à réduire la consommation d'énergie pendant des fluctuations de tension

(43) Veröffentlichungstag der Anmeldung: 08.06.2005
(73) Patentinhaber: Weigel, Roland, 9652 Neu St. Johann (CH)
(72) Erfinder: Weigel, Roland, 9652 Neu St. Johann (CH)
(74) Vertreter: Hepp Wenger Ryffel AG

(56) Entgegenhaltungen:
- EP-A- 0 602 972
- US-A- 3 585 451
- US-A1- 2003 156 946
- PATENT ABSTRACTS OF JAPAN Bd. 2000, Nr. 20, 10. Juli 2001 (2001-07-10) & JP 2001 061285 A (FUJITSU GENERAL LTD), 6. März 2001 (2001-03-06)

## Beschreibung

Die Erfindung betrifft eine Anordnung zum Überlastschutz und ein Verfahren zur Reduktion des Stromverbrauchs bei Netzspannungsschwankungen gemäss den unabhängigen Patentansprüchen.

Kompressoren zur Kühlung werden üblicherweise mit Elektromotoren angetrieben. Wenn es zu Netzspannungseinbrüchen kommt, können diese Elektromotoren durch den stärkeren Strom überlastet und überhitzt werden. Das kann im Extremfall dazu führen, dass die Motoren zum Stillstand kommen. Dies bedeutet eine Überlastung des Motors und andererseits eine Belastung für das Versorgungsnetz.
Umgekehrt belasten mit Elektromotoren angetriebene Kühlanordnungen das Stromnetz im Normalbetrieb sehr unregelmässig, weil Kompressoren zur Kühlung üblicherweise in einem relativ kurzen Schaltzyklus betrieben werden, z.B. 15 min kühlen und 5 min rasten. Insbesondere herkömmliche Motoren, die während des Anlaufens einen hohen Stromverbrauch aufweisen, wirken destabilisierend auf das Stromnetz. In der Folge kann es zu Netzspannungseinbrüchen kommen, durch welche die Elektromotoren wiederum belastet werden.

Die US 3 585 451 offenbart eine Anordnung zum Überlastschutz eines Elektromotors, welcher einen Kompressor betreibt. Der Motor umfasst drei Spulen. Sowohl die Temperatur als auch der Strom durch die einzelnen Spulen wird laufend überwacht. Falls eine Überlastung festgestellt wird, wird die Last des Kompressors vom Motor getrennt. Bei anhaltender Überlastung wird der Motor ausgeschaltet und erst nach dessen Abkühlung wieder eingeschaltet. Dieser Überlastschutz schützt den Motor vor Überhitzung, bewirkt aber durch die vermehrten Schaltzyklen destabilisierend auf das Stromnetz.

Es ist Aufgabe der Erfindung, die bekannten Probleme zu überwinden, insbesondere beim Antrieb von Kompressoren einen Überlastschutz zu schaffen.

Diese Aufgabe wird gelöst mit einer Anordnung zum Überlastschutz eines Elektromotors eines Kompressionsaggregats und einem Verfahren zur Reduktion des Stromverbrauchs bei Netzspannungsschwankungen gemäss den unabhängigen Patentansprüchen.

Die Anordnung zum Überlastschutz eines Elektromotor eines Kompressionsaggregats mit einem Kompressor umfasst den Motor, das Kompressionsaggregat, eine Netzspannungs-Überwachungseinheit, eine Einrichtung zum Reduzieren der Last am Motor und eine Steueranordnung. Die Steueranordnung ist mit der Netzspannungs-Überwachungseinheit und mit der Einrichtung zum Reduzieren der Last am Motor derart verbunden, dass der Motor von der Last getrennt und/oder die Last reduziert wird, sobald die Netzspannung einen vorgegebenen ersten Schwellwert, vorzugsweise 80 bis 90% der Nennspannung, besonders vorteilhaft 85% der Nennspannung, unterschreitet.

Die Last des Motors wird durch die Kompressor-Arbeit verursacht, die den Druckunterschied zwischen Ein- und Auslass des Kompressors erzeugt. Zum Reduzieren der Last am Motor kann damit der Druckunterschied zwischen Ein- und Auslass des Kompressors reduziert werden. Vorteilhaft geschieht das über einen By-Pass zwischen dem Ein- und Auslass, der mit mindestens einem Ventil geöffnet bzw. geschlossen werden kann.

Alternativ kann der Motor auch über eine Kupplung mit dem Kompressor verbunden sein. Die Last des Kompressors kann über diese Kupplung verstellt, insbesondere reduziert, und/oder ganz vom Motor abgetrennt werden.

Die Netzspannungs-Überwachungseinheit enthält vorteilhaft einen Spannungskomparator. Mit diesem wird die Netzspannung laufend überwacht. Die Ansprechzeit des Spannungskomparators beträgt vorteilsweise maximal 10 ms.

Die Steueranordnung steht vorzugsweise in Wirkverbindung mit einer Einrichtung zum Ausschalten des Elektromotors. Wenn die Unterspannung länger als eine vorgegebene Zeitdauer, z.B. 10 bis 60 s, andauert, wird der Elektromotor ausgeschaltet. Dies verhindert, dass der Motor bei einer lange anhaltenden Störung des Netzbetriebs Strom verbraucht und das Netz somit weiterhin belastet. Ausserdem wird der Motor dadurch vor Überhitzung geschützt.

Besonders bevorzugt ist der Motor mit einer Einrichtung zur Reduktion des Stromverbrauchs in der Anlaufphase versehen. Vorteilhaft ist hierzu die Verwendung von Heissleitern, die seriell in die Haupt- und in die Hilfswicklung eines Einphasen-Elektromotors geschaltet werden können. In der Hilfswicklung ist ein in Serie mit dem Heissleiter geschalteter Anlaufkondensator vorteilhaft, dessen Kapazitätswert rund 3 bis 5 mal grösser ist als jener des Betriebskondesators. Durch den Heissleiter wird der Anfangsstrom durch den Anlaufkondensator beschränkt, was kapazitive Stromspitzen in der Anlaufphase reduziert. Durch die grosse Kapazität des Anlaufkondensators wird eine grosse Phasenverschiebung des Stroms zwischen der Hilfswicklung und der Hauptwicklung erzeugt, was das Anlaufen des Motors erleichtert. Der Heissleiter in der Hauptwicklung reduziert den Anfangsstrom durch die Hauptspule, was ebenfalls für eine Reduktion der Stromaufnahme in der Anlaufphase sorgt. Bei erreichen der Nenndrehzahl werden zuerst der Anlaufkondensator und der dazu vorgeschaltete Heissleiter vom Stromkreis getrennt, erst dann wird der Heissleiter in der Hauptwicklung mittels eines Schalters überbrückt.

Vorzugsweise ist die Steueranordnung derart mit der Einrichtung zum Einschalten des Motors verbunden, dass der Motor nur dann eingeschaltet wird, wenn die Netzspannung über einem zweiten vorbestimmten Schwellwert, vorzugsweise 90 bis 95% der Netzspannung, liegt. Anderenfalls wird das Einschalten des Motors verhindert. So wird die Netzspannung nicht weiter belastet.

Vorteilhaft wird die Last erst dann mit dem Motor verbunden, wenn dieser eine gewisse vorgegebene Drehzahl erreicht hat. Dies verringert die Stromaufnahme in der Anlaufphase ebenfalls, womit Schwankungen der Netzspannung weiter reduziert werden. Die vorbestimmte Drehzahl ist vorzugsweise die Nenndrehzahl des Motors, sie kann aber auch darunter liegen, z.B. bei 80% der Nenndrehzahl.

Der Kompressor der erfindungsgemässen Vorrichtung ist vorzugsweise in einer Klimaanlage oder einem Kühlschrank eingebaut, weil die durch Kühlanlagen erzeugten Spannungsschwankungen wegen deren kurzen Zyklus relativ gross sind. In Kühlanlagen ist deshalb der Nutzen der erfindungsgemässen Vorrichtung besonders gross.

Das Verfahren zum Reduzieren des Stromverbrauchs eines Elektromotors an einem Kompressionsaggregat bei Netzspannungsschwankungen, insbesondere bei einer Reduktion der Netzspannung, umfassent die folgenden Schritte:
- Überwachen der Netzspannung
- Reduzieren der Last am Motor durch den Kompressor, wenn die Netzspannung unter einen ersten Schwellwert sinkt, so dass der Motor etwa im Leerlauf betrieben wird.

Die Reduktion der Last am Motor kann realisiert werden, indem die Druckdifferenz zwischen Ein- und Auslass des Kompressors reduziert wird. Besonders vorteilhaft wird diese Druckdifferenz auf Null reduziert, weil dann fast die gesamte Last vom Motor genommen wird. Die Reduktion sollte vorteilhaft innert weniger als 30 ms, besonders vorteilhaft innert etwa 20 ms erfolgen, damit die Reaktionszeit kurz genug ist, um einem starken Spannungseinbruch entgegenzuwirken und um zu verhindern, dass der Motor zum Stillstand kommt.

Die Druckdifferenz kann durch das Öffnen und/oder Schliessen von einem oder mehreren Ventilen in einem By-Pass zwischen Ein- und Auslass des Kompressors reduziert werden. Dabei ist es vorteilhaft, wenn durch das Öffnen des By-Pass die übrigen Wege des zu komprimierenden Mediums, z.B. Kühlflüssigkeit, geschlossen werden. Damit lasst sich ein Druckabbau im Kühlsystem verhindern.

Alternativ ist es auch möglich, dass die Last über eine Kupplung vom Motor abgekoppelt wird. So wird die Last sehr schnell und vollständig vom Motor genommen, dieser läuft innert kürzester Zeit im Leerlauf.

Weiter ist es vorteilhaft, dass die Zeit, während welcher sich der Motor im Leerlauf befindet, gemessen wird, und dass nach einer vorbestimmten Zeitdauer im Leerlauf der Motor ausgeschaltet wird. Damit wird verhindert, dass der Motor bei länger anhaltenden Spannungseinbrüchen die Netzspannung weiterhin belastet oder dass er überhitzt wird. Vorteilsweise liegt diese vorbestimmte Zeitdauer im Bereich von 10 bis 60 s.

Besonders bevorzugt wird ein Elektromotor verwendet, der während der Anlaufphase mit einem reduzierten Strom gespeist werden kann. Dadurch wird die Netzspannung weniger stark belastet, wenn der Motor eingeschaltet wird, als dies bei einem herkömmlichen Motor der Fall wäre.

Eine Möglichkeit, einen Elektromotor während der Anlaufphase mit einem reduzierten Strom zu speisen, ist dann gegeben, wenn zum Einschaltzeitpunkt ein Heissleiter in Serie zur Hauptwicklung des Motors geschaltet wird. Dadurch wird der Anfangsstrom durch die Hauptwicklung reduziert. Besonders vorteilhaft wird ausserdem in Serie zur Hilfswicklung eine Anordnung aus einem Heissleiter in Serie zu einem Anlaufkondensator geschaltet. Diese Anordnung sollte parallel zum Betriebskondensator geschaltet sein, damit sich die Kapazitäten addieren und somit während dem Einschaltvorgang eine grosse Phasenverschiebung zwischen der Hauptwicklung und der Hilfswicklung erzeugt wird. Um kapazitive Stromspitzen zu vermeiden, wird der Strom auf den Anlaufkondensator zum Zeitpunkt des Einschaltens durch den Heissleiter beschränkt und erst durch die Erwärmung des Heissleiters erhöht. Wenn im Verlauf des Anlaufens der Rotor-Schlupf des Motors gegen Null geht, wird zuerst die Anordnung in Serie zur Hilfwicklung vom Stromkreis getrennt und danach der Heissleiter in Serie zur Hauptwicklung mittels Schaltern überbrückt. Darauf befindet sich der Motor im Normalbetrieb, die Phasendifferenz zwischen der Haupt- und der Hilfswicklung wird allein durch den Betriebskondensator erzeugt, dessen Kapazität vorzugsweise rund drei bis fünf mal kleiner ist als jene des Anlaufkondensators.

Weiter ist es vorteilhaft, wenn der Elektromotor erst nach Erreichen einer vorbestimmten Drehzahl mit der Last des Kompressors verbunden wird. Dadurch verbraucht der Motor während des Anlaufens ebenfalls weniger Strom. Die vorbestimmte Drehzahl ist vorzugsweise die Nenndrehzahl des Motors, sie kann aber auch darunter liegen.

Der erste Schwellwert für die Druckreduktion liegt vorzugsweise zwischen 80 und 90% der Nennspannung, besonders vorzugsweise bei 85% der Nennspannung. Der zweite Schwellwert für den Wiederaufbau des Drucks liegt zwischen 90 und 95% der Nennspannung. Damit wird einer Überlastung des Stromnetzwerks effizient entgegengewirkt.

Die Erfindung ist im Folgenden anhand von Ausführungsbeispielen und Zeichnungen näher erläutert. Es zeigen:
- Fig. 1:: schematische Darstellung der erfindungsgemässen Anordnung
- Fig. 2:: schematische Darstellung einer alternativen Anordnung,
- Fig. 3:: schematisches Schaltdiagramm eines bevorzugten Elektromotors
- Fig. 4 bis 7:: Diagramme des Stromverbrauchs des Elektromotors und der Druckdifferenz zwischen Ein- und Auslass des Kompressors,
- Fig. 8 und 9:: Diagramme des Verlaufs des mittleren Stroms bei einem Spannungseinbruch und der Druckdifferenz zwischen Ein- und Auslass des Kompressors

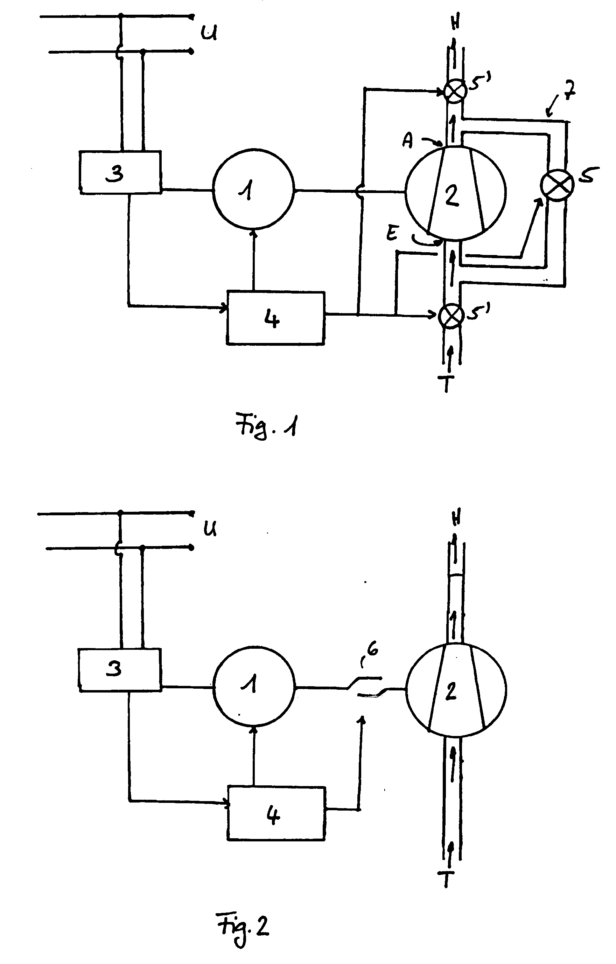

In den Abbildungen Fig. 1 und Fig. 2 sind zwei alternative Ausführungsformen der erfindungsgemässen Anordnung dargestellt. Der Elektromotor 1 treibt einen Kompressor 2 an. Ein Medium, z.B. eine Kühlflüssigkeit, mit einem tiefen Druck T wird im Kompressor zu einem hohen Druck H verdichtet. Die Netzspannungs-Überwachungseinheit 3 misst fortwährend die Netzspannung U und gibt die Information an die Steuerungsanordnung 4 weiter. In Fig. 1 ist der Motor fest mit dem Kompressor verbunden, Einlass E und Auslass A des Kompressors können mit den Ventilen 5, 5' über den By-Pass 7 kurz geschlossen werden. Im Normalbetrieb des Kompressionsaggregats sind die Ventile 5' geöffnet und das Ventil 5 geschlossen. Wenn die Netzspannung U unter den ersten Schwellwert von 85% der Nennspannung sinkt, veranlasst die Steueranordnung 4, dass das Ventil 5 geöffnet und die Ventile 5' geschlossen werden. Die Druckdifferenz zwischen dem Druck LP am Einlass E und dem Druck HP am Auslass A wird dadurch innert 20 ms vorzugsweise auf weniger als 2 bar, besonders vorzugsweise auf weniger als 1 bar, reduziert, die Last am Motor 1 nimmt dadurch stark ab.

Statt eines By-Pass 7 zwischen dem Einlass E und dem Auslass A des Kompressors 2 kann der Motor 1 wie aus Fig. 2 ersichtlich auch über eine Kupplung 6 mit dem Kompressor 2 verbunden sein. Wenn die Netzspannung U unter den ersten Schwellwert sinkt, wird die Kupplung 6 gelöst und somit der Kompressor 2 vom Motor 1 getrennt.

In beiden Fällen wird der Motor 1 erst wieder mit der vollen Last des Kompressors 2 verbunden, wenn die Netzspannung U über den zweiten Schwellwert von 90 bis 95% der Nennspannung steigt. Wenn dies nicht innert 10 bis 60 s der Fall ist, wird der Motor 1 ausgeschaltet und erst wieder eingeschaltet, wenn die Netzspannung U den zweiten Schwellwert übersteigt. Dies verhindert einerseits, dass das Netz weiter belastet wird, andererseits wird der Motor 1 so vor Überhitzung geschützt. Nach dem Einschalten wird der Motor 1 erst dann mit der Last des Kompressor 2 verbunden, wenn er eine gewisse Drehzahl, vorzugsweise mindestens 80% der Nenndrehzahl, erreicht hat.

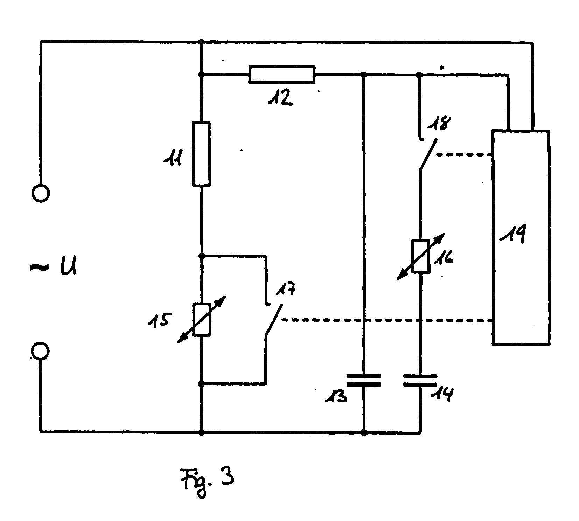

Der Schaltplan des bevorzugten Elektromotors 1 ist in Fig. 3 dargestellt. Der Motor 1 umfasst eine Hauptwicklung 11 und eine Hilfswicklung 12. In Serie zur Hauptwicklung 11 ist ein Heissleiter 15 schaltbar. In Serie zur Hilfswicklung 12 ist ein Betriebskondensator 13 geschaltet. Parallel dazu kann ein Anlaufkondensator 14 mit einem zweiten Heissleiter 16 in Serie in Serie zur Hilfswicklung 12 geschaltet werden. Die Schalter 17 und 18 werden durch die Steueranordnung 20 bedient.

Beim Einschalten des Motors 1 sind beide Heissleiter 15 und 16 und der Anlaufkondensator 14 in den Stromkreis geschaltet. Der Heissleiter 15 reduziert die Stromaufnahme der Hauptwicklung 11 im Moment des Einschaltvorgangs, der Heissleiter 16 jenen durch den Anlaufkondensator 14. Im Anlaufkondensator 14 wird dadurch eine kapazitive Stromspitze bei Einschalten verhindert. Durch die beiden Kondensatoren 13 und 14 ist die Phasenverschiebung der Ströme durch die Hauptwicklung 11 und die Hilfswicklung 12 gross, was das Anlaufen des Motors begünstigt. Sobald der Rotor-Schlupf des Motor gegen Null geht, wird über die Steueranordnung zuerst der Anlaufkondensator 14 über den Schalter 18 aus dem Stromkreis genommen, anschliessend der Heissleiter 15 über den Schalter 17 überbrückt. Dann befindet sich der Motor im Normalbetrieb, die Phasenverschiebung in der Hilfswicklung wird durch den Betriebskondensator 13 erzeugt.

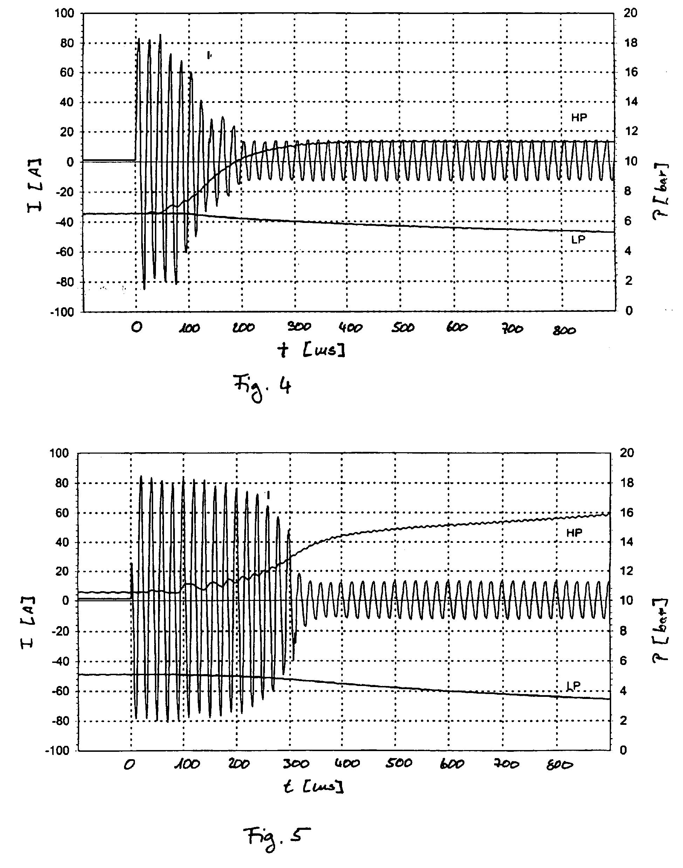

Der Stromverlauf I beim Einschalten eines herkömmlichen Elektromotors 1 an einem Kompressor 2 ist in Fig. 4 dargestellt. Die Druckdifferenz zwischen dem Druck LP am Einlass E und dem Druck HP am Auslass A des Kompressors 2 ist zum Einschaltzeitpunkt Null. Die Betriebskapazität des Motors 1 beträgt 35 µF, die Anfangskapazität 88 µF, die Netzspannung U ist 228 V. Die Stromspitze liegt bei 86 A. In Fig. 5 wird derselbe Motor 1 eingeschaltet, doch die Druckdifferenz zwischen Einlass E und Auslass A des Kompressors 2 beträgt 5.2 bar. Die Spitzenstromstärke beträgt 85 A, der Anlaufvorgang dauert rund doppelt so lange. Mit einer solchen Anordnung wird das Netz bei jedem Einschaltvorgang stark belastet.

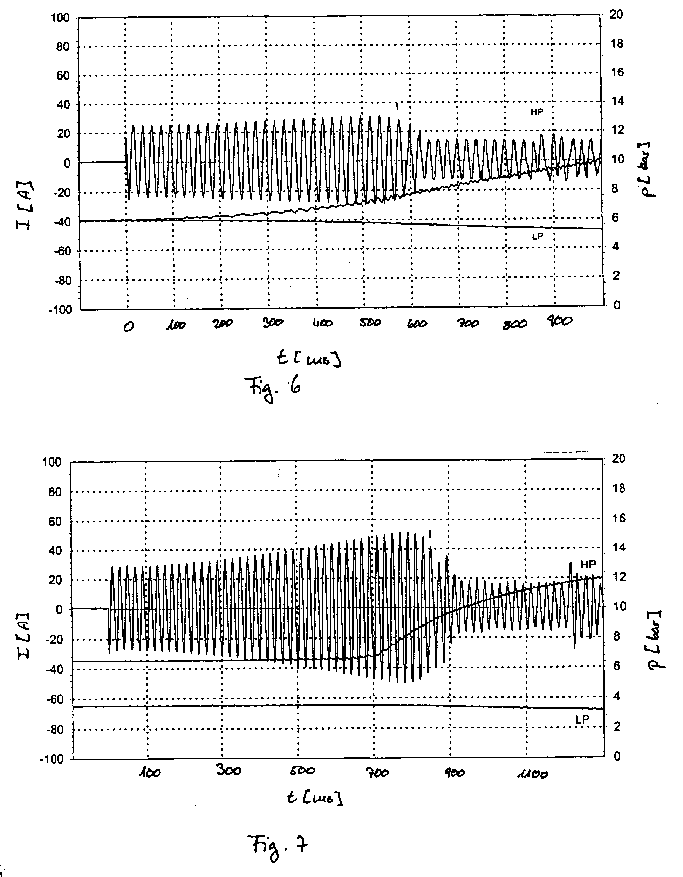

Fig. 6 zeigt die analoge Situation zu Fig. 4 mit einem Motor 1 wie in Fig. 3 beschrieben, wobei die Netzspannung U 229 V beträgt. Die Spitzenstromstärke beträgt nur noch 28 A. Wenn die Druckdifferenz zwischen Einlass E und Auslass A des Kompressords 2 zu Beginn der Einschaltphase 3.5 bar beträgt, erhöht sich die Spitzenstromstärke auf 51 A, die Dauer des Einschaltvorgangs wird ca. verdoppelt. Der Stromverlauf I und der Verlauf des Drucks LP am Einlass E und HP am Auslass A des Kondensators 2 sind aus Fig. 7 ersichtlich.

Aus diesen Abbildungen wird ersichtlich, dass die Stromspitzen also deutlich reduziert werden können, wenn der Motor 1 einerseits nur gestartet wird, wenn die Last am Motor 1 klein ist, und anderseits die Spannungsversorgung des Motors 1 gemäss Fig. 3 geschaltet ist.

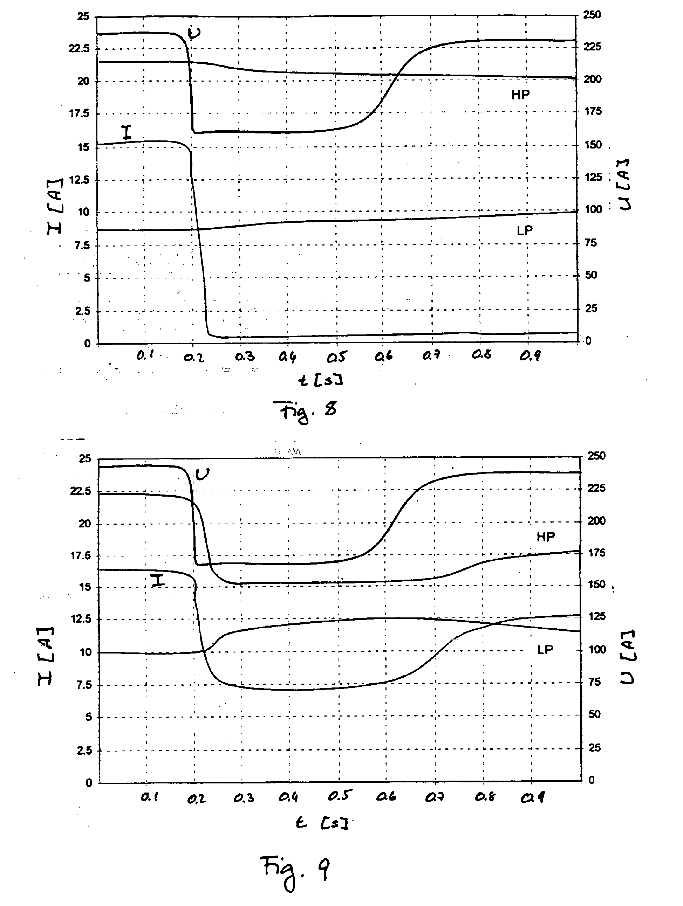

In den Figuren 8 und 9 sind die Folgen eines Spannungseinbruchs von 230 V auf 160 V dargestellt. In Fig. 8 ist eine herkömmliche Vorrichtung ohne Überlastschutz sichtbar. Durch den Spannungseinbruch fällt der Motor 1 ganz aus und läuft auch bei der Normalisierung der Netzspannung U nicht wieder an. Beim erneuten Starten wird der Motor 1 gemäss Fig. 5 einen hohen Anlaufstrom benötigen.

In Fig. 9 wird die Druckdifferenz zwischen dem Druck LP am Einlass E und dem Druck HP am Auslass A des Kompressors 2 nach dem Spannungseinbruch innert 30 ms auf ca. 1/3 der ursprünglichen Druckdifferenz reduziert. Der Motor 1 läuft dadurch mit einem reduzierten Strom I weiter. Wenn die Netzspannung U wieder auf die Nennspannung ansteigt, wird die Druckdifferenz wieder erhöht und der Motor 1 läuft mit dem normalen Stromverbrauch weiter.

## Patentansprüche

1. Anordnung zum Überlastschutz eines Elektromotors (1) eines Kompressionsaggregats mit einem Kompressor (2), wobei die Anordnung eine Einrichtung (6,7) zur Reduktion der Last am Motor (1) und eine Steueranordnung (4) aufweist, **dadurch gekennzeichnet, dass** die Anordnung weiter eine Netzspannungs-Überwachungseinheit (3) aufweist und die Steueranordnung (4) zur Reduktion der Last bei Unterschreiten eines vorbestimmten ersten Schwellwerts der Netzspannung (U) mit der Einrichtung (6,7) verbunden ist.

2. Anordnung nach Anspruch 1, **dadurch gekennzeichnet, dass** mindestens ein Druckausgleichsventil (5,5') an einem By-Pass (7) zwischen Einlass (E) und Auslass (A) des Kompressors (2) für den Druckabbau zwischen dem Druck (LP) am Einlass (E) und dem Druck (HP) am Auslass (A) vorgesehen ist.

3. Anordnung nach Anspruch 1, **dadurch gekennzeichnet, dass** die Verbindung des Elektromotors (1) mit dem Kompressor (2) durch eine Kupplung (6) verstellbar und/oder trennbar verläuft.

4. Anordnung nach einem der Ansprüche 1 bis 3, **dadurch gekennzeichnet, dass** die Netzspannungs-Überwachungseinheit (3) einen Spannungskomparator aufweist.

5. Anordnung nach einem der Ansprüche 1 bis 4, **dadurch gekennzeichnet, dass** die Steueranordnung (4) in Wirkverbindung mit einer Einrichtung zum Abschalten des Elektromotors (1) steht, so dass der Elektromotor (1) abgeschaltet wird, wenn die Unterspannung länger als eine vorgegebene Zeitdauer anhält.

6. Anordnung nach einem der Ansprüche 1 bis 5, **dadurch gekennzeichnet, dass** der Elektromotor (1) mit einer Einrichtung zur Reduktion der Stromaufnahme in der Anlaufphase versehen ist.

7. Anordnung nach Anspruch 6, **dadurch gekennzeichnet, dass** die Einrichtung zur Reduktion der Stromaufnahme in der Anlaufphase des Elektromotors (1)einen in Serie zu einer Hauptwicklung (11) schaltbaren Heissleiter (15) und eine in Serie zu einer Hilfswicklung (12) schaltbare Anordnung aus einem Heissleiter (16) und einem Anlaufkondensator (17) umfasst.

8. Anordnung nach einem der Ansprüche 1 bis 7, **dadurch gekennzeichnet** die Steueranordnung (4) in Wirkverbindung mit einer Einrichtung zum Einschalten des Elektromotors (1) steht, so dass der Elektromotor (1) nur eingeschaltet wird, wenn die Netzspannung (U) über einen zweiten Schwellwert steigt.

9. Anordnung nach einem der vorangehenden Ansprüche, **dadurch gekennzeichnet, dass** die Steueranordnung (4) in Wirkverbindung mit einer Einrichtung zum Verbinden des Elektromotors (1) mit der Last steht, wobei die Last erst mit dem Elektromotor (1) verbunden wird, wenn dieser eine vorbestimmte Drehzahl erreicht hat.

10. Anordnung nach einem der vorangehenden Ansprüche, **dadurch gekennzeichnet, dass** das Kompressionsaggregat in einer Klimaanlage oder einem Kühlschrank eingebaut ist.

11. Verfahren zur Reduktion des Stromverbrauchs eines Elektromotors (1) an einem Kompressionsaggregat bei Netzspannungsschwankungen, insbesondere bei einer Reduktion der Netzspannung (U), umfassend die Schritte
- Überwachen der Netzspannung (U)
- Reduzieren der Last am Elektromotor (1) durch den Kompressor (2), wenn die Netzspannung (U) unter einen ersten Schwellwert sinkt, so dass der Elektromotor (1) etwa im Leerlauf betrieben wird.

12. Verfahren nach Anspruch 11, **dadurch gekennzeichnet, dass** die Last über die Reduktion der Druckdifferenz zwischen dem Druck (LP) am Einlass (E) und dem Druck (HP) am Auslass (A) des Kompressors (2) vom Elektromotor (1) genommen wird.

13. Verfahren nach Anspruch 11 oder 12, **dadurch gekennzeichnet, dass** die Druckdifferenz zwischen dem Druck (LP) am Einlass (E) und dem Druck (HP) am Auslass (A) des Kompressors (2) auf Null reduziert wird.

14. Verfahren nach einem der Ansprüche 12 oder 13, **dadurch gekennzeichnet, dass** die Druckdifferenz durch das Öffnen und oder Schliessen von einem oder mehreren Ventilen (5,5') in einem By-Pass (7) zwischen Einlass (E) und Auslass (A) des Kompressors (2) reduziert wird.

15. Verfahren nach Anspruch 11, **dadurch gekennzeichnet, dass** die Last über eine Kupplung (6) vom Elektromotor (1) abgekoppelt wird.

16. Verfahren nach einem der Ansprüche 11 bis 15, **dadurch gekennzeichnet, dass** die Zeit, während welcher sich der Elektromotor (1) im Leerlauf befindet, gemessen wird, und dass nach einer vorbestimmten Zeitdauer im Leerlauf der Elektromotor (1) ausgeschaltet wird.

17. Verfahren nach einem der Ansprüche 11 bis 16, **dadurch gekennzeichnet, dass** der Strom (I) durch den Elektromotor (1) während der Anlaufphase reduziert wird.

18. Verfahren nach Anspruch 17, **dadurch gekennzeichnet, dass** während der Anlaufphase ein Heissleiter (15) in Serie zu einer Hauptwicklung (11) und eine Anordnung aus einem Anlaufkondensator (14) in Serie mit einem Heissleiter (16) in Serie zu einer Hilfswicklung (12) geschaltet wird.

19. Verfahren nach einem der Ansprüche 11 bis 18, **dadurch gekennzeichnet, dass** der Elektromotor (1) erst nach Erreichen einer vorbestimmten Drehzahl mit der Last des Kompressors (2) verbunden wird.

20. Verfahren nach einem der Ansprüche 11 bis 19, **dadurch gekennzeichnet, dass** der erste Schwellwert für Reduktion der Last am Elektromotor (1) bei 80 bis 90 % der Nennspannung liegt, vorzugsweise bei 85% der Nennspannung.

21. Verfahren nach einem der Ansprüche 10 bis 20, **dadurch gekennzeichnet, dass** der zweite Schwellwert für die Erhöhung der Last am Elektromotor (1) bei 90 bis 95% der Nennspannung liegt.

22. Verfahren nach einem der Ansprüche 10 bis 21, **dadurch gekennzeichnet, dass** die Last am Elektromotor (1) innert weniger als 30 ms reduziert wird, vorzugsweise innert etwa 20 ms.

## Claims

1. Arrangement for overload protection of an electric motor (1) of a compression unit having a compressor (2), the arrangement having a device (6, 7) for reducing the load on the motor (1) and a control arrangement (4), **characterized in that** the arrangement furthermore has a mains voltage-monitoring unit (3) and the control arrangement (4), is connected to the device (6, 7) for the purpose of reducing the load in the event of the mains voltage (U) falling below a predetermined, first threshold value.

2. Arrangement according to Claim 1, **characterized in that** at least one pressure-compensating valve (5, 5') is provided on a bypass (7) between the inlet (E) and the outlet (A) of the compressor (2) for reducing the pressure between the pressure (LP) at the inlet (E) and the pressure (HP) at the outlet (A).

3. Arrangement according to Claim 1, **characterized in that** the connection of the electric motor (1) to the compressor (2) is made via a coupling (6) such that it can be adjusted and/or disconnected.

4. Arrangement according to one of Claims 1 to 3, **characterized in that** the mains voltage-monitoring unit (3) has a voltage comparator.

5. Arrangement according to one of Claims 1 to 4, **characterized in that** the control arrangement (4) is in interacting connection with a device for switching the electric motor (1) off, with the result that the electric motor (1) is switched off when the undervoltage lasts longer than a predetermined period of time.

6. Arrangement according to one of Claims 1 to 5, **characterized in that** the electric motor (1) is provided with a device for reducing the current consumption in the start-up phase.

7. Arrangement according to Claim 6, **characterized in that** the device for reducing the current consumption in the start-up phase of the electric motor (1) comprises an NTC thermistor (15) which can be connected in series with a main winding (11), and an arrangement, which can be connected in series with an auxiliary winding (12), comprising an NTC thermistor (16) and a start-up capacitor (17).

8. Arrangement according to one of Claims 1 to 7, **characterized in that** the control arrangement (4) is in interacting connection with a device for switching the electric motor (1) on, with the result that the electric motor (1) is only switched on when the mains voltage (U) rises above a second threshold value.

9. Arrangement according to one of the preceding claims, **characterized in that** the control arrangement (4) is in interacting connection with a device for connecting the electric motor (1) to the load, the load only being connected to the electric motor (1) when it has reached a predetermined speed.

10. Arrangement according to one of the preceding claims, **characterized in that** the compression unit is built into an air-conditioning system or a refrigerator.

11. Method for reducing the current consumption of an electric motor (1) using a compression unit in the event of mains voltage fluctuations, in particular in the event of a reduction in the mains voltage (U), comprising the following steps:
- monitoring the mains voltage (U)
- reducing the load on the electric motor (1) by means of the compressor (2) when the mains voltage (U) falls below a first threshold value, with the result that the electric motor (1) is running on approximately no-load.

12. Method according to Claim 11, **characterized in that** the load is removed from the electric motor (1) by means of reducing the pressure difference between the pressure (LP) at the inlet (E) and the pressure (HP) at the outlet (A) of the compressor (2).

13. Method according to Claim 11 or 12, **characterized in that** the pressure difference between the pressure (LP) at the inlet (E) and the pressure (HP) at the outlet (A) of the compressor (2) is reduced to zero.

14. Method according to either of Claims 12 or 13, **characterized in that** the pressure difference is reduced by opening and/or closing one or more valves (5, 5') in a bypass (7) between the inlet (E) and the outlet (A) of the compressor (2).

15. Method according to Claim 11, **characterized in that** the load is disconnected from the electric motor (1) by means of a coupling (6).

16. Method according to one of Claims 11 to 15, **characterized in that** the time during which the electric motor (1) is on no-load is measured, and **in that** the electric motor (1) is switched off after a predetermined period of time on no-load.

17. Method according to one of Claims 11 to 16, **characterized in that** the current (I) through the electric motor (1) is reduced during the start-up phase.

18. Method according to Claim 17, **characterized in that**, during the start-up phase, an NTC thermistor (15) is connected in series with a main winding (11), and an arrangement comprising a start-up capacitor (14) in series with an NTC thermistor (16) is connected in series with an auxiliary winding (12).

19. Method according to one of Claims 11 to 18, **characterized in that** the electric motor (1) is only connected to the load of the compressor (2) once a predetermined speed has been reached.

20. Method according to one of Claims 11 to 19, **characterized in that** the first threshold value for reducing the load on the electric motor (1) is 80 to 90% of the rated voltage, preferably 85% of the rated voltage.

21. Method according to one of Claims 10 to 20, **characterized in that** the second threshold value for increasing the load on the electric motor (1) is 90 to 95% of the rated voltage.

22. Method according to one of Claims 10 to 21, **characterized in that** the load on the electric motor (1) is reduced within less than 30 ms, preferably within approximately 20 ms.

## Revendications

1. Arrangement de protection contre les surcharges d'un moteur électrique (1) d'un groupe de compression muni d'un compresseur (2), l'arrangement présentant un dispositif (6, 7) de réduction de la charge au moteur (1) et un arrangement de commande (4), **caractérisé en ce que** l'arrangement présente en outre une unité de surveillance de la tension du réseau (3) et l'arrangement de commande (4) est relié avec le dispositif (6, 7) pour la réduction de la charge lorsque la tension du réseau (U) devient inférieure à une première valeur de seuil prédéfinie.

2. Arrangement selon la revendication 1, **caractérisé en ce qu'**il est prévu au moins une vanne de compensation de pression (5, 5') sur un bipasse (7) entre l'entrée (E) et la sortie (A) du compresseur (2) pour la réduction de la pression entre la pression (LP) à l'entrée (E) et la pression (HP) à la sortie (A).

3. Arrangement selon la revendication 1, **caractérisé en ce que** la liaison du moteur électrique (1) avec le compresseur (2) s'étend à travers un accouplement (6) en étant positionnable et/ou sectionnable.

4. Arrangement selon l'une des revendications 1 à 3, **caractérisé en ce que** l'unité de surveillance de la tension du réseau (3) présente un comparateur de tension.

5. Arrangement selon l'une des revendications 1 à 4, **caractérisé en ce que** l'arrangement de commande (4) est en liaison active avec un dispositif de mise hors circuit du moteur électrique (1), de sorte que le moteur électrique (1) est mis hors circuit lorsque la sous-tension est maintenue pendant plus longtemps qu'une durée prédéfinie.

6. Arrangement selon l'une des revendications 1 à 5, **caractérisé en ce que** le moteur électrique (1) est prévu avec un dispositif de réduction de la consommation de courant dans la phase de démarrage.

7. Arrangement selon la revendication 6, **caractérisé en ce que** le dispositif de réduction de la consommation de courant dans la phase de démarrage du moteur électrique (1) comprend une thermistance CTN (15) qui peut être branchée en série avec un enroulement principal (11) et un arrangement, composé d'une thermistance CTN (16) et d'un condensateur de démarrage (17), qui peut être branché en série avec un enroulement auxiliaire (12).

8. Arrangement selon l'une des revendications 1 à 7, **caractérisé en ce que** l'arrangement de commande (4) est en liaison active avec un dispositif de mise en circuit du moteur électrique (1), de sorte que le moteur électrique (1) n'est mis en circuit que lorsque la tension du réseau (U) augmente au-dessus d'une deuxième valeur de seuil.

9. Arrangement selon l'une des revendications précédentes, **caractérisé en ce que** l'arrangement de commande (4) est en liaison active avec un dispositif de connexion du moteur électrique (1) avec la charge, la charge n'étant connectée avec le moteur électrique (1) que lorsque celui-ci a atteint une vitesse de rotation prédéfinie.

10. Arrangement selon l'une des revendications précédentes, **caractérisé en ce que** le groupe de compression est installé dans un équipement de climatisation ou un réfrigérateur.

11. Procédé de réduction de la consommation électrique d'un moteur électrique (1) au niveau d'un groupe de compression lors de fluctuations de la tension du réseau, notamment lors d'une réduction de la tension du réseau (U), comprenant les étapes suivantes
- surveillance de la tension du réseau (U)
- réduction de la charge au niveau du moteur électrique (1) par le compresseur (2) lorsque la tension du réseau (U) devient inférieure à une première valeur de seuil, de sorte que le moteur électrique (1) fonctionne approximativement au ralenti.

12. Procédé selon la revendication 11, **caractérisé en ce que** la charge est retirée du moteur électrique (1) en réduisant la différence de pression entre la pression (LP) à l'entrée (E) et la pression (HP) à la sortie (A) du compresseur (2).

13. Procédé selon la revendication 11 ou 12, **caractérisé en ce que** la différence de pression entre la pression (LP) à l'entrée (E) et la pression (HP) à la sortie (A) du compresseur (2) est réduite à zéro.

14. Procédé selon la revendication 12 ou 13, **caractérisé en ce que** la différence de pression est réduite en ouvrant et/ou en fermant une ou plusieurs vannes (5, 5') dans un bipasse (7) entre l'entrée (E) et la sortie (A) du compresseur (2).

15. Procédé selon la revendication 11, **caractérisé en ce que** la charge est déconnectée du moteur électrique (1) par le biais d'un accouplement (6).

16. Procédé selon l'une des revendications 11 à 15, **caractérisé en ce que** le temps pendant lequel le moteur électrique (1) se trouve au ralenti est mesuré et **en ce que** le moteur électrique (1) est mis hors circuit après une durée prédéfinie au ralenti.

17. Procédé selon l'une des revendications 11 à 16, **caractérisé en ce que** le courant (I) à travers le moteur électrique (1) est réduit pendant la phase de démarrage.

18. Procédé selon la revendication 17, **caractérisé en ce que** pendant la phase de démarrage, une thermistance CTN (15) est branchée en série avec un enroulement principal (11) et un arrangement, composé d'un condensateur de démarrage (14) en série avec une thermistance CTN (16), est branché en série avec un enroulement auxiliaire (12).

19. Procédé selon l'une des revendications 11 à 18, **caractérisé en ce que** le moteur électrique (1) n'est relié avec la charge du compresseur (2) qu'après avoir atteint une vitesse de rotation prédéfinie.

20. Procédé selon l'une des revendications 11 à 19, **caractérisé en ce que** la première valeur de seuil pour la réduction de la charge au moteur électrique (1) se situe à 80 % à 90 % de la tension nominale, de préférence à 85 % de la tension nominale.

21. Procédé selon l'une des revendications 10 à 20, **caractérisé en ce que** la deuxième valeur de seuil pour l'augmentation de la charge au moteur électrique (1) se situe à 90 % à 95 % de la tension nominale.

22. Procédé selon l'une des revendications 10 à 21, **caractérisé en ce que** la charge au moteur électrique (1) est réduite en moins de 30 ms, de préférence dans un délai d'environ 20 ms.
